# DEMANDE DE BREVET EUROPEEN

(11) **EP 4 768 364 A1**
(43) Date de publication de la demande: **01.07.2026**
(21) Numéro de dépôt: 25221857.3
(22) Date de dépôt: 09.12.2025
(51) Int. Cl.: B62D 21/11, B62D 25/08

(54) **AGENCEMENT COMPRENANT UN SUPPORT POUR RECEVOIR DES ÉQUIPEMENTS ENTRE DEUX LONGERONS D'UN VÉHICULE**

(30) Priorité: 10.12.2024 FR 2413802
(71) Demandeur: FLEXIS, 92100 Boulogne-Billancourt (FR)
(72) Inventeur: DELORD, Christian, 78640 VILLIERS-SAINT-FREDERIC (FR); GAUMONT, Hervé, 91140 VILLEBON SUR YVETTE (FR); WISS, Nicolas, 78460 CHEVREUSE (FR)
(74) Mandataire: Lavoix

(57) **Abrégé**

Un agencement (2) pour véhicule, notamment automobile (1), comprend un longeron gauche (3) et un longeron droit (4), au moins une patte gauche (31 ; 32) fixée au longeron gauche (3) et s'étendant transversalement vers un plan médian (M) du véhicule, au moins une patte droite (41 ; 42) fixée au longeron droit (4) et s'étendant transversalement vers le plan médian (M), un support (10) s'étendant transversalement entre le longeron gauche (3) et le longeron droit (4), le support (10) étant plaqué au-dessous de la patte gauche (31 ; 32) et au-dessous de la une patte droite (41 ; 42). Le support (10) est destiné à supporter des équipements (51 ; 52 ; 53 ; 54 ; 55) du véhicule, fixés au-dessus du support (10) et/ou au-dessous du support (10).

## Description

L'invention porte sur un agencement pour véhicule comprenant un longeron gauche et un longeron droit, au moins une patte gauche fixée au longeron gauche et au moins une patte droite fixée au longeron droit et un support s'étendant transversalement entre le longeron gauche et le longeron droit. L'invention porte encore sur un procédé d'obtention d'un tel agencement. L'invention porte encore sur un châssis comprenant un tel agencement. L'invention porte encore sur un véhicule comprenant un tel châssis ou un tel agencement.

Un véhicule, en particulier un véhicule automobile, comprend généralement un compartiment moteur exiguë. Il en résulte un manque de place pour loger des équipements d'un tel véhicule qui s'avèrent de plus en plus nombreux. Cette problématique est d'autant plus marquée pour un véhicule comprenant un compartiment agencé à l'avant et ayant un porte-à-faux avant faible.

L'objectif de la présente invention est de remédier aux inconvénients ci-dessus. En outre, l'invention permet de supporter plusieurs équipements au sein d'un compartiment moteur tout en satisfaisant la réglementation en termes de chocs, en limitant la masse, et enfin en étant particulièrement économique.

### Résumé de l'invention

Pour atteindre cet objectif, l'invention porte sur un agencement pour véhicule, notamment pour véhicule automobile, comprenant un longeron gauche et un longeron droit, notamment agencés à l'avant d'un tel véhicule, au moins une patte gauche fixée au longeron gauche et s'étendant transversalement vers un plan médian d'un tel véhicule, au moins une patte droite fixée au longeron droit et s'étendant transversalement vers le plan médian, un support s'étendant transversalement entre le longeron gauche et le longeron droit, le support étant plaqué au-dessous de l'au moins une patte gauche et au-dessous de l'au moins une patte droite. Le support est destiné à supporter des équipements d'un tel véhicule, de tels équipements étant fixés au-dessus du support et/ou au-dessous du support.

Selon des aspects avantageux mais non obligatoires de l'invention, un tel agencement peut incorporer une ou plusieurs des caractéristiques suivantes prise(s) selon toutes combinaisons techniquement admissibles :
- Le support comprend au moins un taraudage ou au moins un écrou fixé au support de chaque côté selon la direction transversale, l'au moins une patte gauche et l'au moins une patte droite comprenant chacune au moins un trou, l'agencement comprenant au moins une vis traversant l'au moins un trou de l'au moins une patte gauche et au moins une vis traversant l'au moins un trou de l'au moins une patte droite de sorte à coopérer avec l'au moins un taraudage ou l'au moins un écrou fixé au support de sorte à assurer la fixation du support par rapport à l'au moins une patte gauche et par rapport à l'au moins une patte droite.
- L'agencement comprend une première patte gauche et une deuxième patte gauche fixées au longeron gauche, les première et deuxième pattes gauche étant agencées l'une derrière l'autre selon la direction longitudinale en étant distantes l'une de l'autre, et une première patte droite et une deuxième patte droite fixées au longeron droit, les première et deuxième pattes droite étant agencées l'une derrière l'autre selon la direction longitudinale en étant distantes l'une de l'autre.
- Le support est une tôle pliée et/ou emboutie.
- Le support a une section selon un plan vertical et longitudinal en forme d'Oméga à l'envers.
- Le support comprend des trous d'axe vertical et des écrous d'axes communs ou sensiblement communs aux axes des trous, les écrous étant fixés au-dessous du support, notamment par soudage, pour la fixation du ou des équipements venant au-dessus du support, et/ou le support comprend des vis d'axe vertical traversant le support et s'étendant sous le support, les vis étant fixées au support, notamment par soudage, pour la fixation du ou des équipements venant au-dessous du support.
- L'agencement comprend une batterie fixée au-dessus du support, notamment une batterie de servitude 12 Volts au plomb, et/ou un compresseur de climatisation fixé au-dessus du support, et/ou une électrovanne fixée au-dessous du support, et/ou un élément d'un système de climatisation d'un habitacle d'un tel véhicule, l'élément étant fixé au-dessous du support, et/ou un élément de chauffage pour un système de chauffage d'un habitacle d'un tel véhicule, l'élément de chauffage étant fixé au-dessous du support.

Selon un deuxième aspect, l'invention concerne un procédé d'assemblage d'un agencement tel que mentionné ci-dessus, ce procédé comprenant une étape de fourniture d'une caisse comprenant un longeron gauche et un longeron droit, au moins une patte gauche étant fixée au longeron gauche et au moins une patte droite étant fixée au longeron droit, un support pour la fixation d'équipements, suivie d'une étape d'accostage de la caisse sur le support via une translation verticale du haut vers le bas de la caisse de sorte que l'au moins une patte gauche et l'au moins une patte droite viennent au-dessus du support.

Selon un troisième aspect, l'invention concerne un châssis de véhicule, notamment de véhicule automobile, caractérisé en ce qu'il comprend un agencement tel que mentionné ci-dessus.

Selon un quatrième aspect, l'invention concerne un véhicule, notamment véhicule automobile, comprenant un châssis tel que décrit précédemment, ou un agencement tel que décrit ci-dessus.

### Présentation des figures

Ces objets, caractéristiques et avantages de la présente invention seront exposés en détail dans la description suivante du mode de réalisation faite à titre non-limitatif en relation avec les figures jointes parmi lesquelles :
La figure 1 est une vue schématique d'un véhicule selon un mode de réalisation de l'invention.
La figure 2 est une vue en perspective partielle d'un châssis du véhicule selon un mode de réalisation de l'invention.
La figure 3 est une vue de détail en perspective du châssis selon le mode de réalisation de l'invention.
La figure 4 est une vue partielle en perspective d'un agencement selon le mode de réalisation de l'invention.
La figure 5 est une autre vue partielle en perspective de l'agencement selon le mode de réalisation de l'invention.
La figure 6 est une vue en perspective d'un support de l'agencement selon le mode de réalisation de l'invention.
La figure 7 est une autre vue en perspective du support de l'agencement selon le mode de réalisation de l'invention.
La figure 8 est une vue partielle schématique en coupe selon un plan vertical et longitudinal de l'agencement selon le mode de réalisation de l'invention.
La figure 9 est une vue de détail en coupe selon un plan vertical et longitudinal de l'agencement selon le mode de réalisation de l'invention.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

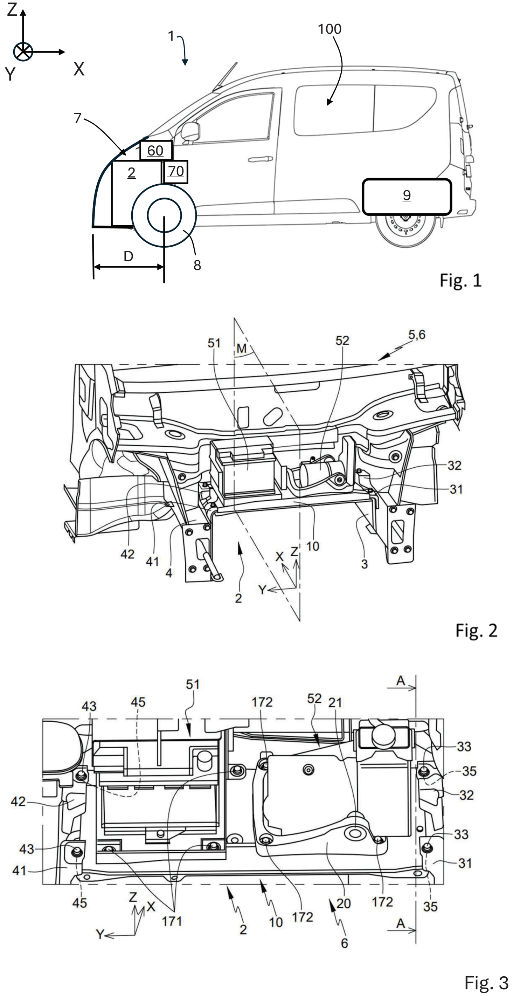

Comme illustré schématiquement sur la figure 1, un véhicule 1, de préférence un véhicule automobile, comprend un compartiment 7 exiguë. De préférence, le compartiment 7 est agencé à l'avant du véhicule 1. Le véhicule 1 a un porte-à-faux avant faible, c'est-à-dire que la distance D entre l'axe d'une roue avant 8 du véhicule 1 et une extrémité avant du véhicule 1 est comprise entre 60 et 90 cm, par exemple égale à 75 cm.

De préférence, le véhicule 1 comprend un groupe motopropulseur 9, par exemple électrique, agencé à l'arrière. Dans ce cas, avantageusement, le véhicule 1 comprend un moyen de transmission de couple aux roues arrière, c'est-à-dire que le véhicule 1 est mû en déplacement par propulsion.

Le véhicule 1 comprend un châssis 6. Le véhicule 1, ou le châssis 6, comprend un agencement 2 comme il sera vu par la suite.

Comme illustré sur la figure 2, l'agencement 2 comprend un longeron gauche 3 et un longeron droit 4. De préférence, les longerons gauche et droit sont agencés à l'avant du véhicule 1, c'est-à-dire qu'il s'agit de longerons avant. Alternativement, les longerons sont agencés à l'arrière du véhicule, c'est-à-dire qu'il s'agit de longerons arrière (mode de réalisation non illustré).

Comme illustré sur la figure 3, l'agencement 2 comprend encore au moins une patte gauche 31 ; 32 fixée au longeron gauche 3 et s'étendant transversalement vers un plan médian M du véhicule 1 (illustré sur la figure 2). Le plan médian M s'étend verticalement et longitudinalement, au milieu, ou sensiblement au milieu du véhicule 1 selon la direction transversale.

L'agencement 2 comprend encore au moins une patte droite 41 ; 42 fixée au longeron droit 4 et s'étendant transversalement vers le plan médian M du véhicule 1.

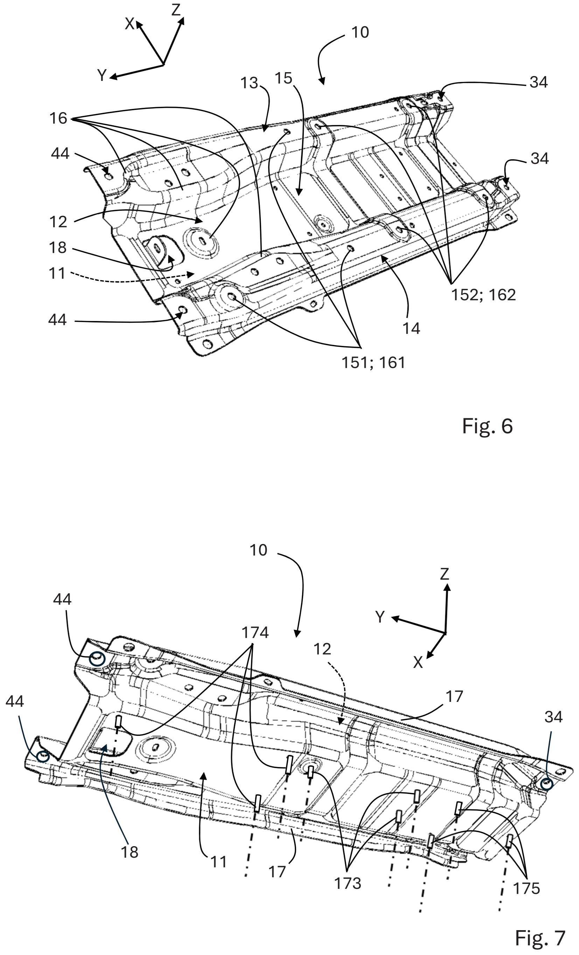

L'agencement 2 comprend encore un support 10 s'étendant transversalement entre le longeron gauche 3 et le longeron droit 4. Comme illustré sur les figures 6, 7 et 8, le support 10 comprend une face inférieure 11, en vis-à-vis du sol ou sensiblement en vis-à-vis du sol en position montée du support 10. La face inférieure 11 est donc orientée vers le bas ou sensiblement orientée vers le bas. Le support 10 comprend une face supérieure 12, opposée à la face inférieure 11, c'est-à-dire orientée vers le haut, ou sensiblement orientée vers le haut.

Dans le mode de réalisation illustré, tout particulièrement sur la figure 3, l'agencement 2 comprend une première patte gauche 31 et une deuxième patte gauche 32 fixées au longeron gauche 3. Les première et deuxième pattes gauche 31, 32 sont alors agencées l'une derrière l'autre selon la direction longitudinale tout en étant distantes l'une de l'autre. L'agencement 2 comprend encore une première patte droite 41 et une deuxième patte droite 42 fixées au longeron droit 4. Les première et deuxième pattes droite 41, 42 sont alors agencées l'une derrière l'autre selon la direction longitudinale tout en étant distantes l'une de l'autre.

De préférence, les première et deuxième pattes gauche 31, 32 sont fixées au longeron gauche 3 par soudage et les première et deuxième pattes droite 41, 42 sont fixées au longeron droit 4 par soudage.

Plus précisément, le support 10 est plaqué au-dessous des pattes gauche 31 ; 32 et au-dessous des pattes droite 41 ; 42. Autrement dit, le support 10 vient s'agencer sous les première et deuxième pattes gauche et sous les première et deuxième pattes droite.

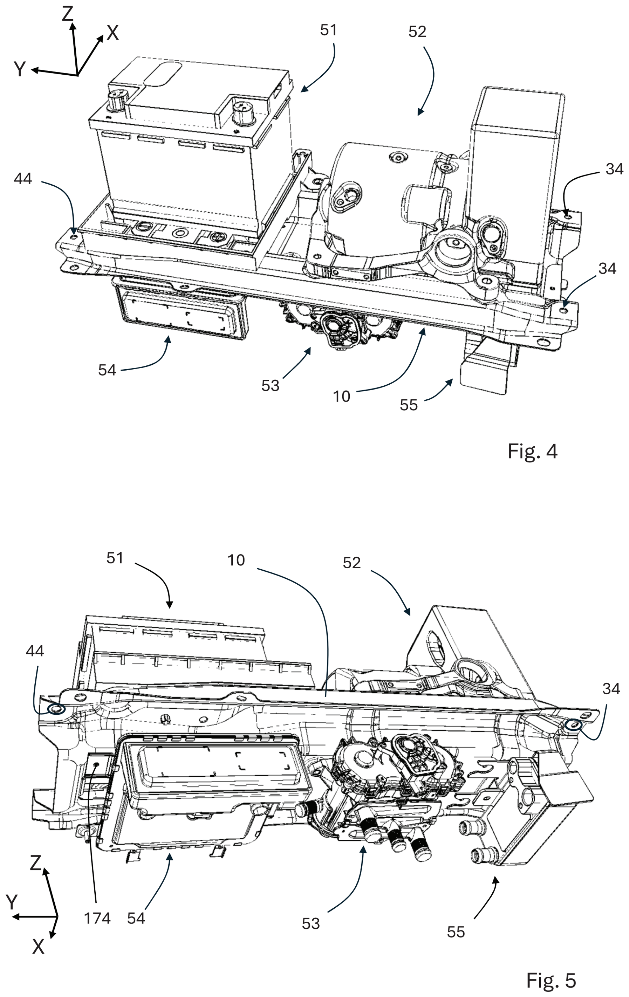

Le support 10 est destiné à supporter des équipements 51 ; 52 ; 53 ; 54 ; 55 du véhicule 1. Des équipements sont fixés au-dessus du support 10 ou des équipements sont fixés au-dessous du support 10. Avantageusement, comme illustré en particulier sur les figures 4 et 5, certains équipements sont fixés sous le support 10 et d'autres équipements sont fixés sur le support 10.

Comme illustré sur la figure 7, le support 10 comprend de préférence au moins un taraudage ou au moins un écrou fixé 34 ; 44 au support 10 de chaque côté selon la direction transversale. De préférence, il s'agit d'écrous rapportés, fixés sur la face inférieure 11 du support 10, c'est-à-dire sous le support 10. Avantageusement, en cas d'écrous, ces écrous 34, 44 sont soudés au support 10 de sorte à faciliter la coopération de vis dans ces écrous. Ces écrous 34, 44 sont destinés à participer à la fixation du support 10 par rapport aux pattes respectives 31, 32, 41, 42.

Ainsi, pour assurer la fixation du support 10, les première et deuxième pattes gauche 31, 32 et les première et deuxième pattes droite 41, 42 comprennent chacune au moins un trou respectif 35, 45 référencés en pointillés sur la figure 3.

Comme illustré sur la figure 3, l'agencement 2 comprend encore des vis 33. De préférence, une vis 33 traverse un trou 35 ménagé dans la première patte gauche 31 et vient coopérer avec un écrou 34 fixé sous le support 10. De préférence, une vis 33 traverse un trou 35 ménagé dans la deuxième patte gauche 32 et vient coopérer avec un écrou 34 fixé sous le support 10. De préférence, une vis 43 traverse un trou 45 ménagé dans la première patte droite 41 et vient coopérer avec un écrou 44 fixé sous le support 10. De préférence, une vis 43 traverse un trou 45 ménagé dans la deuxième patte droite 42 et vient coopérer avec un écrou 44 fixé sous le support 10.

Dans le mode de réalisation illustré, une seule vis 33, 43 assure ainsi la fixation du support 10 par rapport à une seule patte 31, 32, 41, 42.

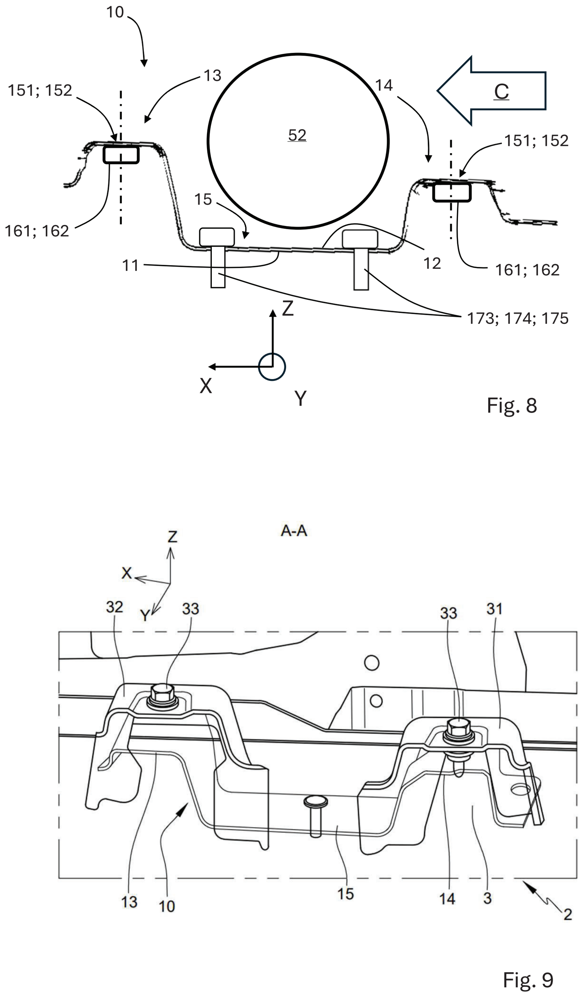

Avantageusement, le support 10 est une tôle pliée et/ou emboutie, par exemple en acier. L'épaisseur de la tôle utilisée pour l'obtention du support 10 est par exemple comprise entre 1 mm et 2 mm, voire entre 1.5 mm et 1.75 mm. Comme illustré en particulier sur la figure 8, le support 10 a une section selon un plan vertical et longitudinal en forme globale, générale, d'Oméga à l'envers, c'est-à-dire la tête en bas. En effet, comme illustré sur les figures 6, 8 et 9, le support 10 comprend sensiblement deux poutres 13, 14 en U s'étendant transversalement en étant orientée vers le bas et reliées entre elles deux par une portion 15 plane ou sensiblement plane s'étendant sensiblement dans un plan transversal et longitudinal.

Avantageusement, des plis et/ou arrondis et/ou bossages et/ou emboutis 16 sont ménagés au niveau de chaque « poutre » 13, 14 et au niveau de la portion plane 15. Eventuellement, comme illustré sur la figure 7, le support 10 comprend des bords tombés 17, au minimum sur une partie de la longueur du support s'étendant selon la direction transversale.

Comme illustré sur la figure 6, le support 10 comprend des trous 151, 152 d'axe vertical. Le support 10 comprend encore des écrous 161, 162 d'axes communs ou sensiblement communs aux axes des trous 151, 152. Les écrous 161, 162 sont alors fixés au-dessous du support 10, c'est-à-dire contre la face inférieure 11, par exemple par soudage. Les trous 151, 152 débouchant au niveau des écrous respectifs 161, 162 permettent d'assurer la fixation du ou des équipements 51, 52 agencés sur le support, c'est-à-dire au-dessus de celui-ci. Pour cela, comme illustré sur la figure 3, des vis 171 viennent prendre en sandwich l'équipement 51 entre les têtes des vis 171 et le support 10 via la coopération des vis 171 avec les écrous 161. Par exemple, deux vis 171, ou trois, ou encore quatre, sont prévues pour coopérer avec un même nombre d'écrous 161. De la même manière, des vis 172 viennent prendre en sandwich l'équipement 52 entre les têtes des vis 172 et le support 10 via la coopération des vis 172 avec les écrous 162. Par exemple, deux vis 172, ou trois, ou encore quatre, sont prévues pour coopérer avec un même nombre d'écrous 162.

L'agencement 2 comprend de préférence des équipements 51, 52, 53, 54, 55. Par exemple, l'équipement 51 est une batterie fixée ici au-dessus du support 10. La batterie 51 est avantageusement une batterie de servitude, par exemple au plomb, de préférence ayant une tension à ses bornes de l'ordre de 12 Volts. Alternativement, il peut s'agir d'une autre technologie de batterie. Par exemple l'équipement 52 est un compresseur d'un système de climatisation 60 équipant le véhicule 1. L'équipement 52 est fixé au-dessus du support 10.

De préférence encore, comme illustré sur la figure 7, le support 10 comprend des vis 173 d'axe vertical traversant le support 10 et s'étendant sous le support 10. De préférence encore, comme illustré sur la figure 7, le support 10 comprend des vis 174 d'axe vertical traversant le support 10 et s'étendant sous le support 10. De préférence encore, comme illustré sur la figure 7, le support 10 comprend des vis 175 d'axe vertical traversant le support 10 et s'étendant sous le support 10. Les vis 173, 174, 175 sont avantageusement fixées au support 10, par exemple par soudage. Pour cela, des trous sont par exemple préalablement ménagés dans le support et les vis 173, 174, 175 sont insérées dans ces trous avant d'être soudées de sorte à être immobilisées. Ainsi, les vis 173, 174, 175 jouent un rôle de goujon ou équivalent pour la fixation d'équipements agencés au-dessous du support 10. Des écrous viennent alors coopérer avec les vis 173, 174, 175 pour assurer les fixations respectives des équipements 53, 54 et 55. Par exemple, trois vis 173 sont prévues et autant d'écrous pour la fixation de l'équipement 53. Par exemple, trois vis 174 sont prévues et autant d'écrous pour la fixation de l'équipement 54. Par exemple, trois vis 175 sont prévues et autant d'écrous pour la fixation de l'équipement 55. Moins ou davantage de vis, et le même nombre d'écrous correspondant, peuvent également convenir.

De préférence, l'équipement 53 est une électrovanne, par exemple munie de sept voies, et elle est fixée au-dessous du support 10. De préférence, l'équipement 55 est un élément du système de climatisation 60. L'équipement 55 est fixé au-dessous du support 10. De préférence, l'équipement 54 est un chauffage pour un système de chauffage 70 pour un habitacle 100 du véhicule 1. L'équipement 54 est fixé au-dessous du support 10.

Par exemple, la longueur du support 10 selon la direction transversale est de 754 mm, la largeur du support 10 selon la direction longitudinale est de 274 mm, et la hauteur du support 10 est de 60 mm.

Un mode d'exécution d'un procédé d'assemblage ou montage de l'agencement 2 va maintenant être décrit. Dans un premier temps, on fournit une caisse 5 comprenant le longeron gauche 3 et le longeron droit 4. Au moins une patte gauche, de préférence la première patte gauche 31 et la deuxième patte gauche 32 sont déjà fixées au longeron gauche 3. Au moins une patte droite, de préférence la première patte droite 41 et la deuxième patte gauche 42 sont déjà fixées au longeron droit 4. On fournit également le support 10 pour la fixation des équipements 51, 52, 53, 54, 55. Eventuellement, tous les équipements, ou seulement certains équipements, sont fixés préalablement sur le support 10 et/ou sous le support.

Ensuite, on effectue une étape d'accostage de la caisse 5 sur le support 10. Pour ce faire, on translate verticalement, du haut vers le bas, la caisse 5 de sorte que les pattes gauche 31, 32 et les pattes droite 41, 42 viennent juste au-dessus du support 10. Autrement dit, le support 10 est positionné, placé de telle manière que les pattes 31, 32, 41, 42 de la caisse puissent venir précisément au contact du support 10, au-dessus des deux extrémités transversales du support 10. Ensuite, il ne reste qu'à procéder à une étape de vissage des vis 33 pour les faire coopérer avec les écrous 34 du support 10 côté gauche (voir figure 9) et à une étape de vissage des vis 43 pour les faire coopérer avec les écrous 44 du support 10 côté droit. A noter que ce vissage est particulièrement aisé puisqu'il se fait depuis le dessus et que le support est de préférence solidement maintenu en position. Les vis sont donc insérées dans les écrous correspondants par le dessus ce qui permet en outre d'avoir une excellente visibilité pour cette étape d'assemblage. Après vissage, on obtient alors le mariage du support, éventuellement équipé préalablement de certains voire de tous les équipements 51, 52, 53, 54, 55, avec la caisse 5.

Eventuellement, certains équipements voire tous les équipements sont fixés après la fixation du support « nu » avec la caisse 5.

En résumé, la solution porte sur un support multifonction 10 optimisé en termes de coût, de masse tout en étant compatible avec les contraintes de choc liées en particulier à un porte-à-faux D (voir figure 1) relativement court, par exemple de l'ordre de 75 cm.

Ainsi l'agencement 2 s'étend peu selon la direction longitudinale X vers l'avant. Cette particularité est obtenue notamment par une optimisation des emplacements des équipements, à savoir en sandwich de part et d'autre du support 10, c'est-à-dire au-dessus et au-dessous. En outre, les équipements sont agencés de préférence avec leur plus grande dimension s'étendant selon la direction transversale de sorte à limiter l'encombrement selon la direction longitudinale ainsi que selon la direction verticale. Il en résulte éventuellement un espace sous le support bien qu'il supporte des équipements 53, 54, 55 en dessous. Autrement dit, le support équipé occupe un étage, un niveau, et un autre niveau ou étage demeure disponible en-dessous.

Ainsi, l'architecture et la mise en place des éléments sont compatibles avec le porte-à-faux faible du véhicule.

La solution permet donc d'éviter de concevoir, fabriquer, monter un support spécifique pour chaque équipement. D'importantes économies en temps de conception, essais, tests, gestion des stocks (une seule référence de support au lieu de cinq références), et en temps de fabrication sont donc réalisées. En outre, la solution consomme moins de matière ce qui la rend davantage économique et a fortiori moins lourde. Dans le mode de réalisation illustré, cinq équipements sont reçus, maintenus, positionnés par rapport au seul support 10. Le véhicule ainsi équipé voit sa masse optimisée ce qui améliore son autonomie, ce qui est particulièrement recherché en cas de véhicule électrique.

Pour rappel, la forme du support doté d'une section en Oméga, en accordéon, permet de faciliter, d'optimiser l'implantation des organes ou équipements. Notamment, l'équipement 52, de préférence un compresseur électrique de climatisation alimenté en haute tension, par exemple de l'ordre de 800 V, sans courroie, est en partie logé dans le creux du Oméga, entre les deux poutres en U 13, 14 du support 10 comme illustré sur la figure 8. De préférence, c'est la partie inférieure du compresseur 52 qui est logé dans le creux entre les deux poutres en U faisant partie du support 10. Avantageusement, l'agencement 2 comprend une embase 20, un support intermédiaire, entre le support 10 et le compresseur 52. L'embase 20 ou le compresseur 52 comprend alors un moyen de filtration 21 agencé entre l'embase et le compresseur de sorte à ne pas transmettre de vibrations issues du compresseur au support, et par conséquent à la caisse 5 du véhicule. Par exemple, cette embase 20 est en alliage d'aluminium, de préférence obtenue en fonderie. Ainsi, le compresseur 52 est agencé à l'avant du véhicule, même en cas de moteur agencé à l'arrière, le système de climatisation 60 étant de préférence agencé également à l'avant du véhicule.

En outre, la forme du support 10 offre une meilleur inertance selon la direction verticale ce qui permet de réduire l'épaisseur de la tôle utilisée pour l'obtention du support. Comme vu précédemment, cela se traduit par un gain de matière, donc un gain de coût de la matière et un gain de masse. Comme évoqué précédemment, les plis et/ou arrondis et/ou bossages et/ou emboutis 16 et/ou les bords tombés 17 sont prévus de préférence. Ces formes 16, 17 rigidifient le support 10 sans ajout de matière ni surplus de masse significatifs.

De préférence, comme illustré sur les figures 6 et 7, un orifice ou trou 18 est prévu au sein de la portion sensiblement plane 15 du support 10 au niveau de la zone de réception de l'équipement 51. En effet, de préférence, l'équipement 51 est la batterie 12 V, par exemple au Plomb, dite de servitude, qui est généralement équipée d'une durite ou tuyau d'évacuation des acides d'une telle batterie. Ainsi, la durite est insérée dans le trou 18 si bien qu'elle traverse le support 10 et peut s'étendre jusqu'en bas du véhicule afin d'éviter tout contact entre les substances acides qui s'évacueraient et le châssis ou un composant du véhicule.

La forme du support 10 offre encore un avantage en termes de comportement en cas de crash ou choc avant C illustré schématiquement sur la figure 8. En effet, le support 10 se comprime, se plie, au niveau de sa portion plane 15 entre les deux portions de type poutre 13, 14 lors d'un choc avant. Ainsi, le support 10 n'interfère pas dans le rôle d'amorti conféré par les longerons. A noter que le mode de fixation du support sur les longerons concourt à ne pas interférer le rôle des longerons en cas de choc. En effet, les deux pontets gauche 31, 32, indépendants l'un de l'autre et à distance l'un de l'autre selon la direction longitudinale, et les deux pontets droit 41, 42, indépendants l'un de l'autre et à distance l'un de l'autre selon la direction longitudinale ont peu d'impact en termes de rigidification du support. Ainsi, la portion plane ou sensiblement plane 15 du support peut se plier sans difficulté grâce à ces quatre fixations ponctuelles et espacées 31, 32, 41, 42 avec la caisse 5. De préférence, ces quatre pattes sont fusibles, se cassent, ou leurs soudures de fixation sur le longeron cèdent en cas de choc, en particulier les deux pattes 31, 41 situées à l'avant du véhicule. Autrement dit, le support 10 n'interfère pas, ne limite pas, la compression des longerons 3, 4 lors d'un choc. Par exemple l'entraxe entre deux vis 33, respectivement deux vis 43, pour la fixation du support, selon la direction longitudinale, est comprise dans un plage allant de 150 à 200mm, notamment de l'ordre de 190 mm. La portion plane 15 entre les deux points de fixation gauche ou droit s'étend selon la direction longitudinale entre 80 mm et 130 mm de sorte à permettre un pliage aisé en cas de choc.

De préférence, l'élément ou équipement 54 est de préférence connu sous l'abréviation HVCH pour le terme anglo-saxon High Voltage Central Heating. Il s'agit d'un élément permettant de chauffer le liquide du système de refroidissement / chauffage équipant le véhicule, par exemple en comprenant une résistance chauffante.

De préférence, l'élément ou équipement 55 est connu sous le terme « Chiller » et fait partie du système de climatisation 60 du véhicule. Il permet un échange calorique entre un liquide et un gaz utilisé dans le système de climatisation, et vice versa. L'organe 55 est de préférence relié par deux tuyaux de gaz (entrée / sortie) et deux tuyaux de liquide (entrée / sortie). Ainsi, l'élément 55 permet de transmettre de la chaleur depuis le liquide vers le gaz de climatisation ou du froid depuis le gaz vers le liquide.

De préférence, l'élément 53 est une électrovanne à sept voies par exemple, faisant partie du système de refroidissement. Elle est apte à distribuer un liquide de refroidissement à différents organes en fonction des modes de refroidissement souhaités, par exemple le refroidissement d'une batterie, de l'habitacle 100, ou d'un moteur électrique de l'EPT (de l'Anglais « Electric Power Train ») ou uniquement l'habitacle.

Comme évoqué précédemment, la fixation des organes 51, 52 venant sur le support 10 est facilitée puisque des écrous 161, 162, de préférence soudés sous le support, sont agencés au niveau de la face inférieure 11. Ainsi, il suffit d'insérer des vis 171, 172 depuis le dessus, traverser des trous ménagés dans chaque organe (ou son embase le cas échéant) et venir coopérer avec les écrous 161, 162. La fixation des organes 53, 54, 55 venant sous le support est quant à elle facilitée puisque les vis ou goujons 173, 174, 175, de préférence soudées au support 10, s'étendent sensiblement verticalement sous le support 10. Ainsi, il suffit de placer, par exemple un à un, chaque élément 53, 54, 55 via des trous ménagés dans ces éléments pour que les tiges filetées des vis ou goujons 173, 174, 175 dépassent. Ensuite, il suffit de faire coopérer des écrous avec ces vis pour assurer le maintien de chaque élément vis-à-vis du support. A noter que ces vis 173, 174, 175 participent au pré-maintien des organes respectifs 53, 54, 55 avant le serrage des écrous.

Evidemment, d'autres équipements, à la place de ceux mentionnés, ou en plus de ceux mentionnés, ou moins d'équipements peuvent être fixés sur ou sous le support 10. Eventuellement, les équipements fixés sur le support dans le mode de réalisation illustré peuvent être fixés sous le support et/ou inversement. Dans ce cas, éventuellement le support a une forme différente, voire est monté à l'envers, la tête en bas.

En résumé, la solution rend possible la fixation de plusieurs organes, par exemple cinq, par l'intermédiaire d'un seul support 10 s'étendant transversalement au sein d'un compartiment moteur 7 agencé à l'avant. Comme évoqué, la solution permet d'abaisser la masse globale du véhicule en ne prévoyant qu'un seul support et non un par organe à fixer. Il en résulte une réduction du nombre de systèmes de fixation, notamment de vis et/ou d'écrous. Notamment, seules deux vis 33 et deux vis 43 suffisent à fixer l'unique support 10 à la caisse 5. Evidemment, la solution réduit le nombre de supports puisqu'un seul suffit.

En outre, sur un véhicule électrique doté d'un moteur électrique agencé à l'arrière, de préférence de type propulsion, il devient aisé d'agencer un moteur à l'avant, de préférence un moteur électrique sous le support et par conséquent sous les équipements 53, 54, 55 le cas échéant. En effet, la solution qui permet d'agencer, de concentrer autour du support 10 les équipements offre un espace disponible en-dessous. Autrement dit, la solution facilite le passage d'un véhicule à propulsion avec moteur arrière, à un véhicule à quatre roues motrices, doté d'un moyen de traction à l'avant, en particulier lorsqu'il s'agit d'un moteur électrique relativement compact.

Ainsi, bien que le compartiment moteur 7 soit exiguë, en particulier lorsque le porte à faux avant est faible, et que de nombreux équipements volumineux nécessitent d'être agencés à l'intérieur, la solution offre un gain de place. En outre, la solution permet de supporter plusieurs équipements sur un unique support au sein du compartiment moteur, tout en satisfaisant la réglementation en termes de chocs, en limitant la masse, et enfin en étant particulièrement économique.

Bien que le mode de réalisation illustré corresponde à un compartiment moteur avant, la solution pourrait être adaptée à un compartiment moteur arrière.

En remarque, la solution atteint donc l'objectif recherché de loger des équipements au sein d'un compartiment moteur à faible porte-à-faux sans impacter les performances en termes de déformations des longerons en cas de choc et présente l'avantage de pouvoir être utilisée pour d'autres véhicule, par exemple à porte-à-faux avant davantage important, voire sur d'autres véhicules disposant d'un compartiment moteur exiguë.

## Revendications

1. Agencement (2) pour véhicule, notamment pour véhicule automobile (1), comprenant :
- un longeron gauche (3) et un longeron droit (4), notamment agencés à l'avant d'un tel véhicule,
- au moins une patte gauche (31 ; 32) fixée au longeron gauche (3) et s'étendant transversalement vers un plan médian (M) d'un tel véhicule,
- au moins une patte droite (41 ; 42) fixée au longeron droit (4) et s'étendant transversalement vers le plan médian (M),
- un support (10) s'étendant transversalement entre le longeron gauche (3) et le longeron droit (4), le support (10) étant plaqué au-dessous de l'au moins une patte gauche (31 ; 32) et au-dessous de l'au moins une patte droite (41 ; 42),
le support (10) étant destiné à supporter des équipements (51 ; 52 ; 53 ; 54 ; 55) d'un tel véhicule, de tels équipements étant fixés au-dessus du support (10) et/ou au-dessous du support (10).

2. Agencement (2) selon la revendication précédente, **caractérisé en ce que** le support (10) comprend au moins un taraudage ou au moins un écrou fixé (34 ; 44) au support (10) de chaque côté selon la direction transversale,
l'au moins une patte gauche (31 ; 32) et l'au moins une patte droite (41 ; 42) comprenant chacune au moins un trou (35 ; 45), l'agencement (2) comprenant au moins une vis (33) traversant l'au moins un trou (35) de l'au moins une patte gauche (31 ; 32) et au moins une vis (43) traversant l'au moins un trou (45) de l'au moins une patte droite (41 ; 42) de sorte à coopérer avec l'au moins un taraudage ou l'au moins un écrou fixé (34, 44) au support (10) de sorte à assurer la fixation du support (10) par rapport à l'au moins une patte gauche (31 ; 32) et par rapport à l'au moins une patte droite (41 ; 42).

3. Agencement (2) selon l'une des revendications précédentes, **caractérisé en ce que** l'agencement (2) comprend :
- une première patte gauche (31) et une deuxième patte gauche (32) fixées au longeron gauche (3), les première et deuxième pattes gauche (31, 32) étant agencées l'une derrière l'autre selon la direction longitudinale en étant distantes l'une de l'autre, et
- une première patte droite (41) et une deuxième patte droite (42) fixées au longeron droit (4), les première et deuxième pattes droite (41, 42) étant agencées l'une derrière l'autre selon la direction longitudinale en étant distantes l'une de l'autre.

4. Agencement (2) selon l'une des revendications précédentes, **caractérisé en ce que** le support (10) est une tôle pliée et/ou emboutie.

5. Agencement (2) selon l'une des revendications précédentes, **caractérisé en ce que** le support (10) a une section selon un plan vertical et longitudinal en forme d'Oméga à l'envers.

6. Agencement (2) selon l'une des revendications précédentes, **caractérisé en ce que** le support (10) comprend des trous (151 ; 152) d'axe vertical et des écrous (161 ; 162) d'axes communs ou sensiblement communs aux axes des trous (151 ; 152), les écrous (161 ; 162) étant fixés au-dessous du support (10), notamment par soudage, pour la fixation du ou des équipements (51 ; 52) venant au-dessus du support (10), et/ou
**en ce que** le support (10) comprend des vis (173 ; 174 ; 175) d'axe vertical traversant le support (10) et s'étendant sous le support (10), les vis (173 ; 174 ; 175) étant fixées au support (10), notamment par soudage, pour la fixation du ou des équipements (53 ; 54 ; 55) venant au-dessous du support (10).

7. Agencement (2) selon l'une des revendications précédentes, **caractérisé en ce que** l'agencement (2) comprend :
- une batterie (51) fixée au-dessus du support (10), notamment une batterie de servitude 12 Volts au plomb, et/ou
- un compresseur (52) de climatisation fixé au-dessus du support (10), et/ou
- une électrovanne (53) fixée au-dessous du support (10), et/ou
- un élément (55) d'un système de climatisation (60) d'un habitacle (100) d'un tel véhicule, l'élément (55) étant fixé au-dessous du support (10), et/ou
- un élément de chauffage (54) pour un système de chauffage (70) d'un habitacle (100) d'un tel véhicule, l'élément de chauffage (54) étant fixé au-dessous du support (10).

8. Procédé d'assemblage d'un agencement (2) selon l'une des revendications précédentes, **caractérisé en ce qu'**il comprend une étape de fourniture :
- d'une caisse (5) comprenant un longeron gauche (3) et un longeron droit (4), au moins une patte gauche (31 ; 32) étant fixée au longeron gauche (3) et au moins une patte droite (41 ; 42) étant fixée au longeron droit (4),
- un support (10) pour la fixation d'équipements (51 ; 52 ; 53 ; 54 ; 55), suivie d'une étape d'accostage de la caisse (5) sur le support (10) via une translation verticale du haut vers le bas de la caisse (5) de sorte que l'au moins une patte gauche (31 ; 32) et l'au moins une patte droite (41 ; 42) viennent au-dessus du support (10).

9. Châssis (6) de véhicule, notamment de véhicule automobile (1), **caractérisé en ce qu'**il comprend un agencement (2) selon l'une des revendications 1 à 7.

10. Véhicule, notamment véhicule automobile (1), comprenant un châssis (6) selon la revendication précédente, ou un agencement (2) selon l'une des revendications 1 à 7.
